(19) Europäisches Patentamt
European Patent Office
Office européen des brevets

(11) **EP 1 865 451 B1**

(12) **EUROPEAN PATENT SPECIFICATION**

(45) Date of publication and mention
of the grant of the patent:
**12.04.2017 Bulletin 2017/15**

(51) Int Cl.:
*G06Q 50/04* *(2012.01)*        *G06Q 10/06* *(2012.01)*

(21) Application number: **07108938.7**

(22) Date of filing: **25.05.2007**

(54) **Data display apparatus and method of controlling the same, data associating apparatus and method of controlling the same, data display apparatus control program, and recording medium on which the program is recorded**

Datenanzeigevorrichtung und Steuerverfahren dafür, Datenverknüpfungsvorrichtung und Steuerverfahren dafür, Steuerprogramm für die Datenanzeigevorrichtung und Aufzeichnungsmedium mit darauf gespeichertem Programm

Appareil d'affichage de données et procédé de commande correspondant, appareil d'association de données et procédé de commande correspondant, programme de contrôle d'appareil d'affichage de données et support d'enregistrement sur lequel le programme est enregistré

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **07.06.2006 JP 2006159085**

(43) Date of publication of application:
**12.12.2007 Bulletin 2007/50**

(73) Proprietor: **OMRON CORPORATION**
**Kyoto-shi, Kyoto 600-8530 (JP)**

(72) Inventors:
• **Fujii, Toru**
**Kyoto-shi, 600-8530 Kyoto (JP)**

• **Sugihara, Shiro**
**Kyoto-shi, 600-8530 Kyoto (JP)**

(74) Representative: **Vossius & Partner**
**Patentanwälte Rechtsanwälte mbB**
**Siebertstrasse 3**
**81675 München (DE)**

(56) References cited:
**US-A1- 2005 246 045**

Remarks:
The file contains technical information submitted after the application was filed and not included in this specification

**Description**

The present invention relates to a data display apparatus and a method of controlling the same, for displaying a series of preceding data pieces before certain time and a series of subsequent data pieces after the time. More particularly, the present invention relates to a data display apparatus for displaying a series of preceding data pieces and a series of subsequent data pieces based on measurement data obtained by each of a plurality of measuring equipments provided for a manufacturing line. The present invention relates to a data associating apparatus and a method of controlling the same, for associating a set of the measurement data pieces obtained from a plurality of objects to be manufactured with each other, among the plurality of measuring equipments.

Hitherto, attempts to improve the quality of products are being made and various quality control methods have been proposed.

For example, to make a tracing, a method of attaching identification codes such as bar codes to intermediate products or seats or the like on which the intermediate products are placed and managing the products by using the identification codes is proposed. To make a tracing, another method of identifying intermediate products in order of intermediate products subjected to manufacturing processes is proposed.

The method of attaching identification codes and managing products by using the identification codes, however, has a problem of high manufacturing cost. In manufacturing processes, defectives are often taken out, fixed, and re-entered. Consequently, in some cases, intermediate products cannot be correctly identified by the above-described method of identifying intermediate products in order of the intermediate products. In this case, it is difficult to accurately associate measurement data obtained in a first manufacturing process from each of intermediate products with measurement data obtained in a second manufacturing process.

Also in such a case, it is desired to roughly associate measurement data in a manufacturing process of a set of a plurality of intermediate products with measurement data in another manufacturing process with each other, and clarify the relation between the processes.

For example, Japanese Patent Application Laid-Open No. 2002-138384 (May 14, 2002) discloses a display apparatus for displaying profile of the quality of a product such as paper, film, or the like. The display apparatus displays a screen of an operation amount of an operating unit and a screen of a measurement amount of a measuring unit in an aligned manner while shifting dead time of a product conveyed from the operating unit to the measuring unit.

Japanese Patent Application Laid-Open No. 2003-109885 (April 11, 2003) discloses a manufacture managing apparatus for predicting a manufacture period and the number of products manufactured on a manufacturing line. The manufacture managing apparatus computes average waiting time of products on the basis of an average lot arrival interval and the length of a queue, computes the work period of the product on the basis of the computed average waiting time and an average lot process interval, and calculates the number of products to be manufactured on the basis of the yield.

Japanese Patent Application Laid-Open No. 2004-347558 (December 9, 2004) discloses a method of measuring profile in the width direction of a sheet product. In the method, thickness is measured and stored in predetermined cycles. A reference point is provided for a rotary die or a pinch roll, and stored data is cut on the basis of a reference signal generated on passage of the reference point, thereby computing a profile. The position of data to be cut out is shifted to the past side only by the number of pieces of data corresponding to a transport time.

The inventors of the present invention have disclosed a quality controller for controlling a manufacturing process in order to manufacture a product having prescribed quality in Japanese Patent Application Laid-Open No. 2005-339498 (December 8, 2005). The quality controller collects measurement data obtained by a plurality of measuring devices provided for a manufacturing process, stores the collected measurement data together with measurement time or collection time, and associates groups of measurement data of the measuring devices with each other in consideration of dead time occurring between the measuring devices in the measurement time or collection time.

The conventional apparatuses, however, have the following problems. In the conventional apparatuses, it cannot be said that the degree of change in measurement data when the manufacturing parameters are changed is displayed clearly to a site worker.

For example, normally, although a large amount of measurement data before a change exists, only a small amount of measurement data exists after the change. On the other hand, a site worker or the like desires to know the influence of a change in manufacturing parameters as soon as possible. Conventionally, measurement data of a sufficient amount before the change and measurement data of an insufficient amount after the change is displayed. However, in such display, the site worker or the like is sometimes influenced by the measurement data of the large amount before the change, and erroneously grasps the state after the change.

In an automatic assembling process, due to unscheduled interruption, buffers between processes, and the like, dead time and the number of buffers between processes varies. Consequently, in the conventional apparatuses as described above, accuracy of association among measurement data in the different processes and association among sets of measurement data in the different processes deteriorates. As a result, accuracy of analysis of the relation is low.

The present invention has been achieved in consideration of the problems and an object of the invention is to provide a data display apparatus by which the user such as a site worker can properly compare data before a change and data after the change with each other.

Another object of the invention is to provide a data associating apparatus for excellently associating measurement data in different processes or sets of measurement data with each other.

The present invention provides a data display apparatus including a display for displaying information and a display controller for controlling the display so as to display a series of preceding data pieces before certain time and a series of subsequent data pieces after the time. To solve the problems, the display controller controls the display so that the number of pieces of the preceding data to be displayed becomes almost equal to the number of pieces of the subsequent data to be displayed.

The present invention also provides a method of controlling a data display apparatus, for controlling a display for displaying information so as to display a series of preceding data pieces before certain time and a series of subsequent data pieces after the time. To solve the problems, the display is controlled so that the number of pieces of the preceding data to be displayed becomes almost equal to the number of pieces of the subsequent data to be displayed.

As examples of display of the series of preceding data pieces and the series of subsequent data pieces, the series of preceding data pieces and the series of subsequent data pieces are displayed as they are, or a statistical process is performed on the series of preceding data pieces and the series of subsequent data pieces and statistical data generated is displayed.

With the configuration and the method, the series of preceding data pieces before certain time and the series of subsequent data pieces after the time are displayed on the display in a state where the number of data pieces of the series of preceding data pieces and that of the series of subsequent data pieces are almost equal to each other. As a result, the user can properly compare the preceding data to be displayed with the subsequent data to be displayed. Specifically, a site worker can properly compare data before a change in the manufacturing parameters with data after the change, so that the state after the change can be prevented from erroneously recognized.

There is a case where the time for dividing data into preceding data and subsequent data cannot be accurately specified. In this case, a situation may occur such that preceding data is determined as subsequent data or vice verse.

For example, a time lag occurs between change time when manufacturing parameters of a manufacturing equipment are changed and change time when measurement data obtained by a measuring equipment positioned downstream of the manufacturing equipment changes. Therefore, if the change time and the time lag can be specified accurately, the measurement data change time can be accurately estimated. However, in some cases, defectives are taken out, fixed, and re-entered in a manufacturing line, so that it is difficult to accurately specify the time lag. In this case, it is difficult to accurately estimate the measurement data change time.

When the measurement data change time estimated from the parameter change time and the time lag differs from actual measurement data change time, a situation may occur in which the measurement data before the change is determined as measurement data after the change, or vice verse. As a result, erroneous information may be provided to the user such as a site worker.

In the data display apparatus according to the present invention, the display controller preferably controls the display so as to exclude a predetermined number of pieces of data before the certain time or data in a predetermined period before the certain time from the series of preceding data pieces to be displayed and to exclude a predetermined number of pieces of data after the time or data in a predetermined period after the time from the series of subsequent data pieces to be displayed. In this case, data which is close to the time and is not clearly determined as the preceding data or the subsequent data is not displayed. Consequently, uncertain data is prevented from being provided to the user, and the user can properly compare the preceding data and the subsequent data with each other.

In the case of applying the present invention to a data display apparatus for displaying data based on measurement data obtained by a plurality of measuring equipments provided for a manufacturing line, the apparatus further includes: a change time obtaining unit, when manufacturing parameters of a manufacturing equipment provided for the manufacturing line are changed, for obtaining change time on which the change is made; and a change determining unit for determining measurement data before measurement data of the measuring equipment changes due to the parameter change and measurement data after the parameter change on the basis of the obtained parameter change time. The display controller controls the display so as to display a series of pieces of measurement data before the change as the series of preceding data pieces and to display a series of pieces of measurement data after the change as the series of subsequent data pieces. In this case, the user such as a site worker can properly grasp a change in measurement data due to a change in manufacturing parameters.

In the data display apparatus according to the present invention, it is preferred that the change determining unit determines the measurement data before the change and the measurement data after the change in each of the plurality of measuring equipments, and that the display controller controls the display so as to display the series of pieces of measurement data before the change and the series of pieces of measurement data after the change for each of the measuring equipments. In this case, since the series of pieces of measurement data before the change and the series of pieces of measurement data after the change are displayed for each of the measuring equipments, the user such as a site worker can properly grasp the influence of a change in the manufacturing parameters of a manufacturing equipment exerted on the manufacturing line.

The data display apparatus according to the present invention may further include a change time estimating unit for estimating change time on which measurement data of the measuring equipment changes due to a change in the manufacturing parameters by using at least one of a dead time and the number of unused data pieces between the manufacturing equipment whose manufacturing parameters are changed and the measuring equipment, and the change time obtained by the change time obtaining unit. Preferably, the change determining unit determines, as measurement data before the change, measurement data before the change time estimated by the change time estimating unit and determines, as measurement data after the change, measurement data after the change time.

In this case, by using at least one of a dead time and the number of unused data pieces between a manufacturing equipment whose manufacturing parameters are changed and the measuring equipment, the change time can be estimated excellently. Therefore, the measurement data before the change and the measurement data after the change in the measuring equipment can be excellently discriminated from each other.

Preferably, the data display apparatus according to the present invention may further include a data associating unit for associating synchronous data with each other among the plurality of measuring equipments, the synchronous data being a set of measurement data obtained by a certain measuring equipment from a plurality of objects to be manufactured. With respect to measuring equipments other than a reference measuring equipment which estimates the change time, the change determining unit determines, as measurement data before the change, measurement data included in synchronous data associated with synchronous data including the measurement data before the change in the reference measuring equipment and determines, as measurement data after the change, measurement data included in synchronous data associated with synchronous data including the measurement data after the change in the reference measuring equipment.

In this case, also for the measuring equipments other than the reference measuring equipment which estimates the change time, the measurement data before the change and the measurement data after the change can be excellently separated from each other by using the measurement data before and after the change which are excellently separated from each other in the reference measuring equipment and the synchronous data as sets of measurement data and associated with each other among the measuring equipments.

The longer the distance in the manufacturing line between a manufacturing equipment whose manufacturing parameters are changed and a reference measuring equipment for estimating change time is, the more the number of uncertain elements increases, so that an error in the estimated change time increases. Consequently, the reference measuring equipment is preferably the measuring equipment which is immediately next to the manufacturing equipment whose manufacturing parameters are changed on the downstream side. With the configuration, an error in the estimated change time can be suppressed.

In the data display apparatus according to the present invention, the data associating unit may include: a synchronous data generator for generating the synchronous data with respect to the certain measuring equipment; and a corresponding synchronous data generator for generating synchronous data corresponding to the synchronous data generated by the synchronous data generator with respect to another measuring equipment.

The corresponding synchronous data generator generates synchronous data in various methods.

For example, the corresponding synchronous data generator generates a plurality of synchronous data candidates for the another measuring equipment, each having the same number of elements as that of the synchronous data of the certain measuring equipment, calculates a coefficient of correlation between the synchronous data of the certain measuring equipment and each of the synchronous data candidates for the another measuring equipment, repeats the operation for each of the synchronous data candidates to specify the synchronous data candidate having the maximum absolute value of the correlation coefficient, and uses the specified synchronous data candidate as synchronous data for the another measuring equipment.

The corresponding synchronous data generator specifies a plurality of pieces of measurement data with respect to the another measuring equipment, each corresponding to a plurality of pieces of measurement data in the synchronous data of the certain measuring equipment, by using at least one of a dead time and the number of unused data pieces between the certain measuring equipment and the another measuring equipment, and generates synchronous data made of the specified plurality of measurement data.

A data display apparatus according to the present invention may further include, for each of the measuring equipments, a data obtaining unit for obtaining measurement data obtained by the measuring equipment; a marker detector for detecting a marker inserted to the manufacturing line; and a section data generator for obtaining measurement data of a plurality of objects to be manufactured included between neighboring markers detected by the marker detector, and generating section data as a set of the plurality of pieces of measurement data obtained. The apparatus may further include a section data associating unit for associating the section data generated by the section data generator with each other among the plurality of measuring equipments. The synchronous data generator generates, for the certain measuring equipment, synchronous data as a set of measurement data pieces smaller than the section data. The corresponding synchronous data generator generates, for the another measuring equipment, synchronous data corresponding to the synchronous data generated by the synchronous data generator by using the section data associated with each other among the plurality of measuring equipments, by the section data associating unit.

In this case, measurement data of a plurality of objects to be manufactured included in a section between neighboring markers is obtained. Section data as a set of the plurality of measurement data pieces obtained is generated. The generated section data is associated with each other among different measuring equipments. Although some of the plurality of objects to be manufactured included in the section between neighboring markers may be taken out or some objects may be added, the possibility that the plurality of objects to be manufactured are more or less unchanged is high. Therefore, the section data is excellently associated with each other among different measuring equipments. Accordingly, the synchronous data associated with each other among different measuring equipments can also maintain excellent association. In the case of generating a plurality of pieces of synchronous data in section data, time transition of the measurement data can be easily grasped.

As a marker, an optional object can be used. A suitable marker is an object which can be easily determined by measuring equipments as an object which is not an object to be manufactured. A marker which is cheap and can be repeatedly used is suitable in terms of manufacturing cost. From the viewpoint of conveyance on the manufacturing line, a marker having the same shape as that of the object to be manufactured is suitable since the number of troubles at the time of operation is small. A nonstandard object to be manufactured such as non-conductive object is also suitable as a marker. In this case, a marker can be easily found in an inspection process and automatically removed from objects to be manufactured.

An object to which an identifier that can be detected in a non-contact manner such as an ID tag is attached can be used as a marker. In this case, however, a reader for reading the identifier has to be provided for the measuring equipment.

In a data display apparatus according to the present invention, for the certain measuring equipment, the corresponding synchronous data generator may calculate ordinal ratio as ratio in the number of elements in the section data, of the order in the section data, of an element positioned in predetermined order in synchronous data generated by the synchronous data generator. The corresponding synchronous data generator then calculates the order in the section data of the another measuring equipment by multiplying the number of elements in the section data of the another measuring equipment associated with the section data by the ordinal ratio, and generates synchronous data in which the element in the calculated order is positioned in the predetermined order.

Further, the synchronous data generating methods may be combined. In this case, it is sufficient to generate synchronous data by any one of the generating methods and adjust the generated synchronous data by another generating method.

For example, a synchronous data adjuster may be further provided, that adjusts synchronous data generated by the corresponding synchronous data generator by using at least one of a dead time and the number of unused data pieces occurring between the different measuring equipments, and the coefficient of correlation between synchronous data generated by the synchronous data generator and synchronous data generated by the corresponding synchronous data generator.

In the data display apparatus according to the present invention, it is preferred that the manufacturing line is provided with an inserting equipment for inserting the marker, and that the apparatus further includes a marker insertion controller for controlling the inserting equipment so as to insert the marker each time a predetermined number of the objects to be manufactured are inserted to the manufacturing line. With the configuration, the number of objects to be manufactured in each section between the neighboring markers can be made almost equal. Thus, section data of the same measuring equipment can be easily compared with each other.

The present invention also provides a data associating apparatus having a data associating unit for associating measurement data with each other, obtained by a plurality of measuring equipments provided for a manufacturing line. To solve the problems, the apparatus has a storage for storing information of the number of unused data pieces between the different measuring equipments. The data associating unit specifies measurement data obtained by one of the different measuring equipments, corresponding to measurement data obtained by the other measuring equipment, by using the number of unused data pieces.

The present invention also provides a method of controlling a data associating apparatus for associating measurement data with each other, obtained by a plurality of measuring equipments provided for a manufacturing line, and including a storage for storing information of the number of unused data pieces between the different measuring equipments. To solve the problems, measurement data obtained by one of the different measuring equipments, corresponding to measurement data obtained by the other measuring equipment, is specified by using the number of unused data pieces, and the measurement data obtained by the different measuring equipments is associated with each other.

With the configuration and the method, measurement data obtained by one of different measuring equipments, corresponding to measurement data obtained by the other measuring equipment, is specified by using the number of unused data pieces. Therefore, without using a marker, section data, and synchronous data, measurement data of different measuring equipments can be excellently associated with each other by using only the number of unused data pieces.

The present invention provides a data associating apparatus for associating a set of measurement data obtained from a plurality of objects to be manufactured, by a plurality of measuring equipments provided for a manufacturing line. To solve the problems, the apparatus has a synchronous data generator for generating synchronous data as the set of measurement data for one of the different measuring equipments, and a corresponding synchronous data generator for generating synchronous data corresponding to the synchronous data generated by the synchronous data generator for the other measuring equipment The corresponding synchronous data generator generates a plurality of synchronous data candidates for the other measuring equipment, each having the same number of elements as that of the synchronous data generated by the synchronous data generator, calculates a coefficient of correlation between the synchronous data for the one of the measuring equipments and the synchronous data candidates for the other measuring equipment, repeats the operation for each of the synchronous data candidates to specify the synchronous data candidate having the maximum absolute value of the correlation coefficient, and uses the specified synchronous data candidate as synchronous data for the other measuring equipment.

The present invention also provides a method of controlling a data associating apparatus for associating a set of measurement data obtained from a plurality of objects to be manufactured, by a plurality of measuring equipments provided for a manufacturing line. To solve the problems, the method includes: a synchronous data generating step of generating synchronous data as the set of measurement data for one of the different measuring equipments; and a corresponding synchronous data generating step of generating synchronous data corresponding to the synchronous data generated in the synchronous data generating step, for the other measuring equipment. In the corresponding synchronous data generating step, a plurality of synchronous data candidates each having the same number of elements as that of the synchronous data generated in the synchronous data generating step are generated for the other measuring equipment. A coefficient of correlation between the synchronous data for the one of the measuring equipments and the synchronous data candidates for the other measuring equipment is calculated. The operation is repeated for each of the synchronous data candidates to specify the synchronous data candidate having the maximum absolute value of the correlation coefficient and, the specified synchronous data candidate is set as synchronous data for the other measuring equipment.

With the configuration and the method, synchronous data is generated for one of measuring equipments, and a plurality of synchronous data candidates are generated for the other measuring equipment. The coefficient of correlation between the synchronous data and each of the synchronous data candidates is calculated. By repeating the operation for each of the synchronous data candidates, a synchronous data candidate having the maximum absolute value of the coefficient of correlation is specified and used as synchronous data for the other measuring equipment. Therefore, without using a marker and section data, synchronous data of different measuring equipments can be excellently associated with each other by using only the coefficient of correlation.

The present invention also provides a data associating apparatus for associating a set of measurement data obtained from a plurality of objects to be manufactured, by a plurality of measuring equipments provided for a manufacturing line. To solve the problems, the apparatus has, for each of the measuring equipments, a data obtaining unit for obtaining measurement data obtained by the measuring equipment; a marker detector for detecting a marker inserted to the manufacturing line; and a section data generator for obtaining measurement data of a plurality of objects to be manufactured included in a section between neighboring markers detected by the marker detector, and generating section data as a set of the plurality of pieces of measurement data obtained. The apparatus further includes a section data associating unit for associating the section data generated by the section data generator with each other among the plurality of measuring equipments.

The present invention also provides a method of controlling a data associating apparatus for associating a set of measurement data obtained from a plurality of objects to be manufactured, by a plurality of measuring equipments provided for a manufacturing line. The method includes, for each of the measuring equipments, a data obtaining step of obtaining measurement data obtained by the measuring equipment; a marker detecting step of detecting a marker inserted to the manufacturing line; and a section data generating step of obtaining measurement data of a plurality of objects to be manufactured included between neighboring markers detected, and generating section data as a set of the plurality of pieces of measurement data obtained. The method further includes a section data associating step of associating the generated section data with each other among the plurality of measuring equipments.

With the configuration and the method, measurement data of a plurality of objects to be manufactured included in a section between neighboring markers is obtained. Section data as a set of the plurality of measurement data pieces obtained is generated. The generated section data is associated with each other among different measuring equipments. Although some of the plurality of objects to be manufactured included in the section between neighboring markers may be taken out or some objects may be added, the possibility that the plurality of objects to be manufactured are more or less unchanged is high. Therefore, the sector data is excellently associated with each other among different measuring equipments.

Each of the components of the data display apparatus can be made function on a computer by a data display apparatus control program. Each of the components of the data associating apparatus can be made function on a computer by a data associating apparatus control program. Further, by storing the data display apparatus control program and/or the data associating apparatus control program on a computer-readable recording medium, the data display apparatus control program and/or the data associating apparatus control program can be executed on an arbitrary computer.

As described above, the data display apparatus according to the present invention displays, on the display, a series of preceding data pieces before certain time and a series of subsequent data pieces after the time while the numbers of the data pieces are set to be almost equal to each other. Consequently, an effect is produced such that the user can properly compare the preceding data with the subsequent data displayed on the display.

As described above, the data associating apparatus according to the present invention specifies measurement data obtained by one of different measuring equipments, corresponding to measurement data obtained by the other measuring equipment by using the number of unused data pieces. Thus, an effect is produced such that, without using a marker, section data, and synchronous data, measurement data of different measuring equipments can be excellently associated with each other by using only the number of unused data pieces.

As described above, the data associating apparatus according to the present invention calculates the coefficient of correlation between synchronous data of one of the measuring equipments and each of synchronous data candidates of the other measuring equipment. By repeating the operation for each of the synchronous data candidates, synchronous data for the other measuring equipment is obtained. Therefore, an effect is produced such that, without using a maker and section data, synchronous data of different measuring equipments can be excellently associated with each other by using only the coefficients of correlation.

As described above, the data associating apparatus according to the present invention obtains measurement data of a plurality of objects to be manufactured included in a section between neighboring markers, generates section data as a set of a plurality of pieces of measurement data obtained, and associates the generated section data with each other among different measuring equipments. Thus, an effect is produced such that section data associated with each other among the different measuring equipments has excellent association.

FIG. 1 shows a block diagram of components of a data display system according to a preferred embodiment of the present invention;

FIG. 2 shows a block diagram of a schematic configuration of a data collector in the data display system;

FIG. 3 shows graphs of measurement data obtained by a first measuring equipment in the data display system and measurement data obtained by a second measuring equipment displayed in time sequence;

FIG. 4 shows a block diagram of a schematic configuration of a data synchronizer in the data display system;

FIG. 5 shows graphs of a concrete example of process of generating synchronous data in the data synchronizer;

FIG. 6 shows graphs of a concrete example of adjustment of synchronous data by using a dead time and the number of unused data pieces in the data synchronizer;

FIG. 7 shows graphs of measurement data an synchronous data of the first measuring equipment and measurement data and synchronous data of the second measuring equipment in the data synchronizer;

FIG. 8 shows a graph of the correlation between operating current of the first measuring equipment and operating resistance of the second measuring equipment;

FIG. 9 shows a block diagram of a schematic configuration of a data comparator in the data display system;

FIG. 10 shows graphs of a concrete example of estimating change time by using a dead time and the number of unused data pieces in the data comparator;

FIG. 11 shows an example of a display screen on which time series data of measurement data is displayed as comparison data by a data display device in the data display system;

FIG. 12 shows an example of a display screen on which histograms of measurement data are displayed as comparison data by the data display device; and

FIG. 13 shows a flowchart of outline of operations in the data display system.

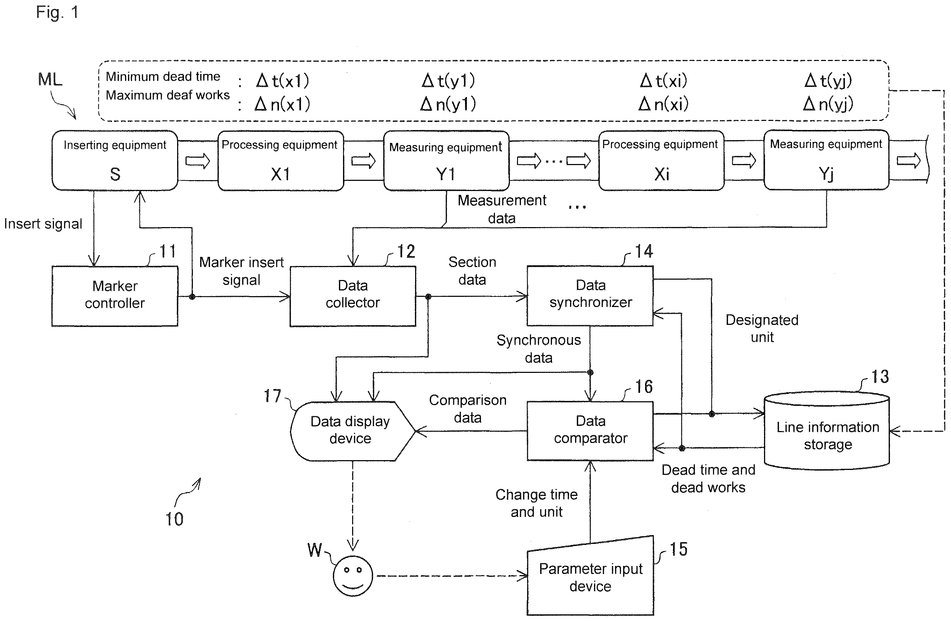

A preferred embodiment of the present invention will be described with reference to FIGS. 1 to 13. First, the outline of the present embodiment will be described with reference to FIG. 1.

FIG. 1 shows a schematic configuration of a data display system according to the present embodiment. A data display system (data display apparatus and data associating apparatus) 10 associates measurement data obtained by a plurality of measuring equipments Yj (j denotes an integer of 1 or larger) provided for a manufacturing line ML with each other and displays the associated measurement data or data based on the measurement data.

First, manufacturing equipments S, Xi, and Yj (i denotes an integer of 1 or larger) provided for the manufacturing line ML will be described. As shown in FIG. 1, a inserting equipment S is provided at the upstream end of the manufacturing line ML, and a plurality of processing equipments Xi and a plurality of measuring equipments Yj are provided downstream of the inserting equipment S.

Subscripts "i" show the order of processing equipments arranged downstream of the inserting equipment S as a reference. In the case of showing a plurality of processing equipments or generally the processing equipments, they are indicated with alphabet letters. Similarly, subscripts "j" indicate the order of measuring equipments arranged downstream of the inserting equipment S as a reference. In the case of showing a plurality of measuring equipments or generally the measuring equipments, they are indicated with alphabet letters.

The inserting equipment S inserts a work (an object to be manufactured) to the manufacturing line ML. Each time a work is inserted to the manufacturing line ML, the inserting equipment S generates a insert signal and transmits it to a marker controller 11 (marker inserting controller).

In the present embodiment, when a marker insert signal is received from the marker controller 11, the inserting equipment S inserts a marker in place of a work to the manufacturing line ML. The marker is used to divide measurement data to be obtained by the measuring equipments Yj. The details of the marker will be described later.

The processing equipment Xi processes a work. Specifically, the processing equipment Xi processes a conveyed work in a predetermined procedure and, as necessary, changes process parameters in accordance with an instruction of a site worker W. For example, by changing the process parameters such as bending, pressure, and temperature, quality characteristics such as external sizes of the work and operating characteristics can be adjusted.

The measuring equipment Yj measures a work. Specifically, the measuring equipment Yj measures quality characteristics such as external sizes and operating characteristics of the work conveyed, and transmits the measurement data together with measurement time to a data collector (data associating unit) 12.

Usually, a plurality of measurement items are measured by a single measuring equipment. In this case, a plurality of pieces of measurement data are generated for each work in a single measuring equipment. In the present embodiment, it is assumed that the plurality of pieces of measurement data are synchronized and perfectly associated with each other.

In the present embodiment, when a marker is conveyed, the measuring equipment Yj measures the marker in the same manner as the work, and transmits measurement data together with measurement time to the data collector 12.

The outline of the data display system 10 will now be described. As shown in FIG. 1, the data display system 10 has the marker controller 11, the data collector 12, a line information storage (storage) 13, a data synchronizer (data associating unit) 14, a parameter input device 15, a data comparator 16, and a data display device (display unit and display controller) 17.

The data collector 12 collects the measurement data obtained by the measuring equipments Yj. When the data collector 12 detects a marker inserted from the inserting equipment S to the manufacturing line ML in accordance with an instruction of the marker controller 11, the data collector 12 generates section data as a set of a plurality of pieces of measurement data included between neighboring markers.

Next, the data collector 12 associates section data of different measuring equipments with each other by using the markers. The data collector 12 displays a plurality of pieces of section data associated with each other among the measuring equipments on the display device 17. Consequently, the site worker W can easily compare the section data associated with each other among the measuring equipments.

The data synchronizer 14 generates synchronous data as a set of a plurality of pieces of measurement data smaller than that of section data by using the section data. The synchronous data is associated with each other among different measuring equipments. The data synchronizer 14 displays a plurality of pieces of synchronous data associated with each other among measuring equipments or a statistical amount of the synchronous data on the data display device 17. Consequently, the site worker W can easily compare the synchronous data or the statistical amounts associated with each other among the measuring equipments with each other. The site worker W can easily grasp time transition of the synchronous data or the statistical amounts.

When the site worker W instructs a change in the manufacture parameters of a manufacturing equipment by the parameter input device 15, the data comparator 16 generates, as comparison data, a plurality of pieces of synchronous data associated with each other among the measuring equipments, which are pieces of synchronous data before and after the change or statistical amounts of the synchronous data pieces. The data comparator 16 displays the generated comparison data on the data display device 17. Consequently, the site worker W can easily compare the synchronous data pieces before and after the change or the statistical amounts of the synchronous data pieces with each other.

Next, the details of the various devices 11 to 17 included in the data display system 10 will be described.

First, the details of the marker controller 11 will be described. The marker controller 11 instructs the inserting equipment S to insert a marker. Concretely, on receipt of a work insert signal from the inserting equipment S, the marker controller 11 counts the number of works inserted and, every predetermined number of inserted works, transmits a marker insert signal that instructs insertion of a marker to the inserting equipment S. Since the number of works inserted between neighboring markers is constant, the number of elements (measurement data) included in section data generated by using the marker by the data collector 12 can be made almost constant. Thus, precision in association of the measurement data improves.

The marker controller 11 transmits the marker insert signal also to the data collector 12. To facilitate generation of synchronous data by the data synchronizer 14 which will be described later, it is desired that the marker insert interval is an integral multiple of the number obtained by adding the number of works which are expected to be increased or decreased during processes to the number of pieces of measurement data in a set to be associated with each other.

The marker will now be described. A suitable marker is a marker which can be easily determined not a work in the measuring equipment Yj. For example, in the case where the measuring equipment Yj measures electric characteristics, a marker which can be easily determined on the basis of the electric characteristics is suitable. In the case where the measuring equipment Yj measures external size accuracy, a marker which can be determined on the basis of the external size accuracy is suitable. In the case where the measuring equipment Yj recognizes shape, a work having a unique shape is suitable as a marker.

A marker which is cheap and can be repeatedly used is suitable in terms of manufacturing cost. From the viewpoint of conveyance on the manufacturing line ML, a marker having the same shape as that of the work is suitable since the number of troubles at the time of operation is small. A nonstandard work such as non-conductive or heavy work is also suitable as a marker. In this case, a marker can be easily found in an inspection process and automatically removed from completed products.

For example, in the case where a work is an electronic component, an electronic component (dummy) designed so that two terminals which are normally conductive are nonconductive can be used as a marker. When the measuring equipment Yj examines whether the two terminals are conductive or not, whether the electronic component is a marker or not can be determined. Since the marker can be easily found in an inspection process and automatically removed as a nonstandard work, the marker does not go missing in products.

A work to which an identifier that can be detected in a non-contact manner such as a bar code or ID tag is attached can be used as a marker. In this case, however, a reader for reading the identifier has to be provided for the measuring equipment Yj.

A site worker may manually insert a marker every break between lots. In this case, however, the site worker may forget inserting a marker, or variations in time consumed for inserting a marker occurs, so that precision of associating measurement data obtained by different measurement equipments Yj deteriorates. Since the number of working processes of the site worker increases, the manufacture cost increases.

Usually, a marker is inserted every hundreds of works. In this case, since the interval between markers is wide, even if the markers are not discriminated from each other, it is not difficult to associate data with each other. However, in the case where markers are inserted more frequently (for example, every tens of works), identifiers for discriminating the markers from each other are preferably provided with the markers. Since markers are inserted in place of works, the larger the number of markers becomes relative to the number of works, the worse the production efficiency deteriorates.

For example, in the case where one marker is inserted every approximately 100 works is equivalent to the case where one defective occurs every approximately 100 works. Therefore, the production efficiency deteriorates by approximately 1%. On the other hand, in the case where one marker is inserted every approximately 1,000 works, deterioration in the production efficiency is only approximately 0.1%.

Although the marker controller 11 inserts a maker every predetermined number of inserted works in the present embodiment, it may insert a marker every predetermined period, or in accordance with other conditions, or at random. In the other cases, however, as described above, a constraint has to be added on the maker controller 11 such that a marker is inserted after approximately 100 works, desirably, hundreds of works are inserted.

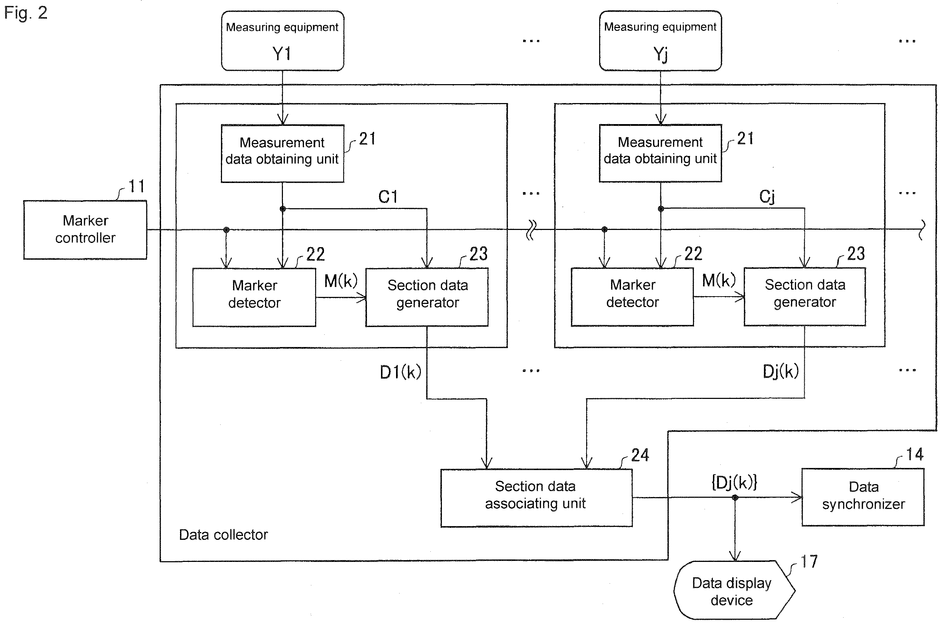

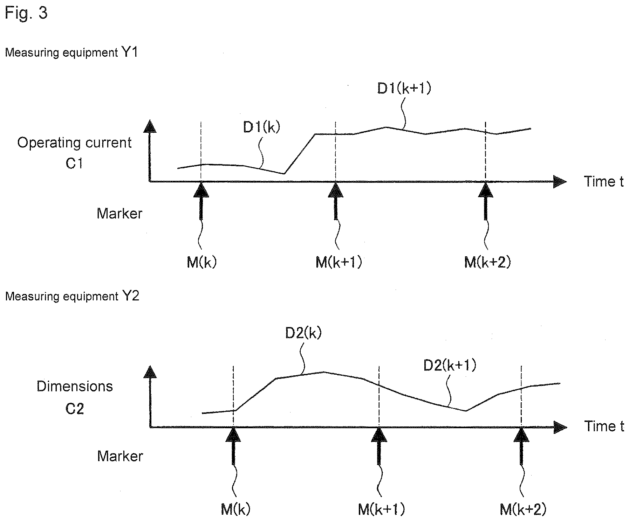

Next, the data collector 12 will be described with reference to FIGS. 2 and 3. FIG. 2 shows a schematic configuration of the data collector 12. As shown in the diagram, the data collector 12 has a measurement data obtaining unit (data obtaining unit) 21, a marker detector 22, a section data generator 23, and a section data associating unit 24. The measurement data obtaining unit 21, the marker detector 22, and the section data generator 23 are provided for each measuring equipment Yj.

The measurement data obtaining unit 21 obtains measurement data Cj obtained by the corresponding measuring equipment Yj. The measurement data obtaining unit 21 transmits the obtained measurement data Cj to the marker detector 22 and the section data generator 23.

The marker detector 22 detects a marker based on the measurement data Cj received from the measurement data obtaining unit 21. The marker detector 22 notifies the section data generator 23 of the fact that the marker is detected. A marker can be detected on the basis of the fact that, for example, received measurement data is out of specification.

The marker detector 22 receives a marker insertion signal from the marker controller 11 and, by using the received marker insert signal, checks whether the corresponding marker has arrived or not. A work can be prevented from being erroneously recognized as a marker, and a marker can be prevented from being erroneously recognized as a work.

The marker detector 22 may receive, in place of a marker insert signal from the marker controller 11, a marker detection signal indicating that a marker is detected, from the marker detector 22 for a measuring equipment which is neighboring on the upstream side and, by using the received marker detection signal, check whether the corresponding marker has arrived or not. In this case, in accordance with the arrangement order of the measuring equipments Yj, whether the corresponding marker has arrived or not can be determined. Further, the marker detector 22 for the last measuring equipment may transmit the marker detection signal to the marker controller 11. In this case, the marker controller 11 can detect that a marker has passed through all of the measuring equipments Yj and, after that, insert the next marker.

The section data generator 23 generates section data as a set of a plurality of pieces of measurement data included between the neighboring markers detected by the marker detector 22. The section data generator 23 transmits the section data to the section data associating unit 24.

Alternatively, markers may be detected by the measuring equipment Yj. In this case, it is sufficient to provide the marker detector 22 in the measuring equipment Yj. On detection of a marker, measuring equipment Yj transmits measurement data indicative of the marker to the data collector 12. On receipt of the measurement data indicative of the marker, the section data generator 23 in the data collector 12 generates the section data.

The section data associating unit 24 associates the section data received from the section data generators 23 corresponding to the measuring equipments Yj with each other. The section data associating unit 24 transmits the plurality of pieces of section data associated with each other among the measuring equipments Yj to the data synchronizer 14 and the data display device 17.

A concrete example of associating the section data with each other will be described with reference to FIG. 3. FIG. 3 shows, in time sequence, measurement data C1 of operating current measured by the first measuring equipment Y1 and measurement data C2 of the external sizes measured by the second measuring equipment Y2. The arrows in the diagram show time points on which the data collector 12 detects the marker M.

As shown in FIG. 3, some time after the first measuring equipment Y1 detects the marker M, the second measuring equipment Y2 on the downstream side detects the marker M. The possibility that works included between the neighboring markers M are the same is high. Therefore, section data D1(k) between the k-th marker M(k) and the (k+1)-th marker M(k+1) in the first measuring equipment Y1 can be satisfactorily associated with section data D2(k) between the markers M(k) and M(k+1) in the second measuring equipment Y2.

Next, the line information storage 13 will be described. The line information storage 13 stores various information on the manufacturing line ML. In the present embodiment, the line information storage 13 stores dead times and the numbers of unprocessed works in each of the manufacturing equipments S, Xi, and Yj.

The dead time denotes a time period consumed between the completion of processing of a work in a manufacturing equipment and the start of processing of the work in the neighboring manufacturing equipment on the downstream side. The minimum dead time as the minimum value of the dead time denotes a time period always consumed between neighboring manufacturing equipments even if the process is performed most efficiently. In other words, before the lapse of the minimum dead time since a work is finished processing in a manufacturing equipment, the work is not to be processed by the neighboring manufacturing equipment on the downstream side.

On the other hand, the dead works denotes the dead works stored up in a manufacturing equipment. In a normal manufacturing equipment, in order to prevent unprocessed works from being excessively stored up and flooding onto the manufacturing line ML, when the dead works exceeds a threshold value, the manufacturing equipment neighboring on the upstream side is instructed to stop. Since the threshold value is the possible maximum value of the dead works, it is called the maximum dead works. That is, the number of works or markers existing between neighboring manufacturing equipments does not exceed the maximum dead works.

Therefore, the dead time and the dead works can be used as new parameters for improving accuracy of association of a set of measurement data with each other among different measuring equipments Yj.

In the present embodiment, the dead time and the dead works of each of the manufacturing equipments S, Xi, and Yj stored in the line information storage 13 are the values obtained by multiplying the dead time and the numbers of unprocessed works of one manufacturing equipment by, respectively, the dead times and the numbers of unprocessed works of all the other manufacturing equipments provided on the upstream side of the manufacturing equipment. In this case, the dead time and the dead works between different measuring equipments Yj can be obtained by subtracting the dead time and the dead works of the measuring equipments on the upstream side from the dead time and the dead works on the downstream side, respectively.

As shown in FIG. 1, in theory, the line information storage 13 desirably stores minimum dead times $\Delta t(xi) \cdot \Delta t(yi)$ as the above-described dead time and the maximum dead works $\Delta n(xi) \cdot \Delta n(yi)$ as the above-described dead works. In the case where the parameters of association are not so accurate even when the minimum dead time and the maximum dead works are used, an average of dead times and an average of the numbers of unprocessed works in a plurality of measuring equipments Yj may be used as the above-described dead time and the above-described dead works, respectively.

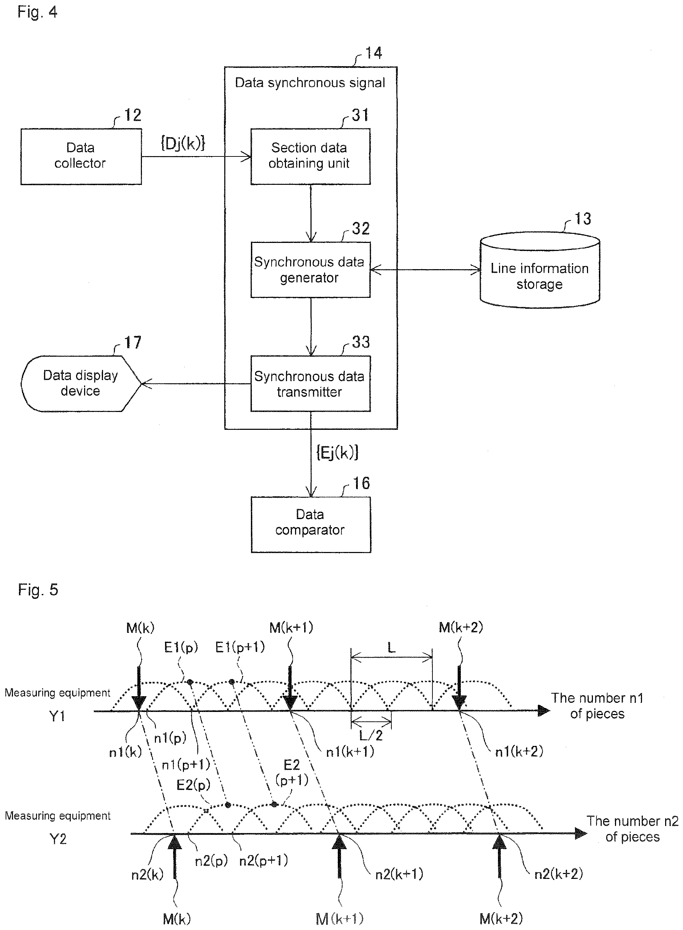

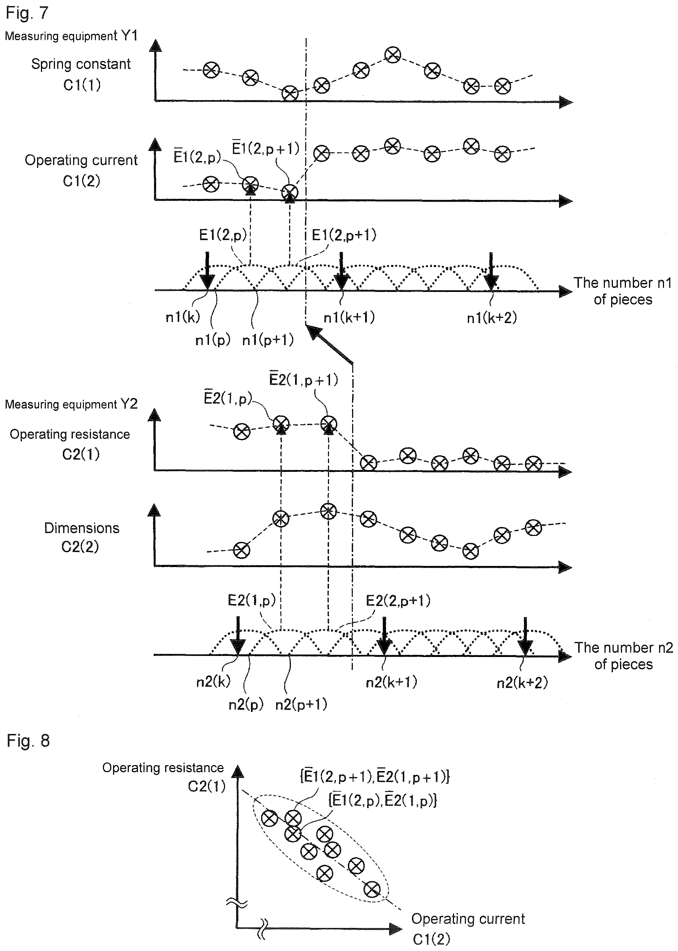

Next, the data synchronizer 14 will be described with reference to FIGS. 4 to 8. FIG. 8 shows a schematic configuration of the data synchronizer 14. As shown in the diagram, the data synchronizer 14 has a section data obtaining unit 31, a synchronous data generator (corresponding synchronous data generator or synchronous data adjuster) 32, and a synchronous data transmitter 33.

The section data obtaining unit 31 obtains section data {Dj(k)} associated with each other among the measuring equipments Yj from the data collector 12. The section data obtaining unit 31 transmits the obtained section data {Dj(k)} to the synchronous data generator 32.

By using the section data {Dj(k)} from the section data obtaining unit 31, the synchronous data generator 32 generates synchronous data {Ej(k)} associated with each other among different measuring equipments Yj, the synchronous data {Ej(k)} being a set of pieces of measurement data Cj that is smaller in number than the section data Dj. The synchronous data transmitter 33 transmits the generated synchronous data {Ej(k)} to the synchronous data transmitter 33.

The reason why the synchronous data Ej is generated is as follows. As described above, in order to prevent deterioration in production efficiency caused by insertion of a marker M, the marker M is usually inserted every hundreds of works. In this case, the number of pieces of measurement data Cj included in one piece of section data Dj is hundreds. On the other hand, in the present embodiment, the statistical amount of a set including a plurality of pieces of measurement data Cj is calculated and transition in the statistical amount is checked, thereby determining a change in the manufacturing process. Consequently, when the number of pieces of measurement data Cj included in the section data Dj is large, a change in the manufacturing process is easily overlooked. In the present embodiment, the synchronous data generator 32 generates the synchronous data. The details of generation of synchronous data will be described later.

The synchronous data transmitter 33 transmits the synchronous data {Ej(k)} from the synchronous data generator 32 to the data comparator 16 and the data display device 17. To display the synchronous data {Ej(k)} intelligibly, it is desired that the data synchronizer 14 calculates statistical amounts such as average value, standard deviation, average$\pm$ (3 x standard deviation), and the like from the measurement data Cj included in the synchronous data Ej(k) and transmits the calculated statistical amounts to the data display device 17.

The synchronous data Ej(k) is generated as follows. The data synchronizer 14 generates synchronous data made of a predetermined number of pieces of measurement data in time sequence from a plurality of pieces of measurement data obtained by the first measurement equipment Y1. While shifting the synchronous data by a predetermined number of pieces, the data synchronizer 14 sequentially generates synchronous data.

Next, the data synchronizer 14 generates synchronous data corresponding to the synchronous data generated with respect to the first measuring equipment Y1 for the second measuring equipment Y2. By repeating the generating process for the other measuring equipments Yj, synchronous data associated with each other among the different measuring equipments Yj is generated.

In the present embodiment, the synchronous data is generated by the following method. First, with respect to certain synchronous data of the first measuring equipment Y1, the ordinal ratio indicating the position in the number of all of measurement data pieces in the section data, of the measurement data piece existing in a predetermined position in all of the measurement data pieces is calculated. Next, synchronous data in which the measurement data corresponding to the calculated ordinal ratio is included in the predetermined position is generated with respect to corresponding section data in the second measuring equipment Y2. The synchronous data generating process is repeated for all of the synchronous data pieces of the first measuring equipment Y1. Examples of the predetermined position are the head, center, and end of the whole measurement data. In the present embodiment, the predetermined position is the center.

FIG. 5 shows a concrete example of the synchronous data generating process performed by the synchronous data generator 32. In the diagram, the lateral axis shows the ordinal number nj of the markers M and the works arrived at the measuring equipment Y2 from certain time point (for example, time point of manufacture start). The arrows indicate time points when the data collector 12 detects the markers M. The range of a broken line shows one piece of synchronous data E. An alternate long and short dash line shows corresponding markers M in the first and second measuring equipments Y1 and Y2. An alternate long and two short dashes line indicates synchronous data E1 and E2 between the first and second measuring equipments Y1 and Y2.

First, the synchronous data generator 32 generates, as the first synchronous data E1(1), synchronous data made of L pieces of measurement data C1 immediately after detection of the first marker M(1) in the first measuring equipment Y1 and, while shifting the synchronous data by L/2 pieces of the measurement data C1, sequentially generates the synchronous data E1. In such a manner, as shown in FIG. 5, a plurality of pieces of synchronous data E1(p), E1(p+1), ... (where p denotes an integer of 1 or larger) of the first measuring equipment Y1 are generated. As shown in the diagram, the synchronous data E1 may be partly overlapped with the neighboring synchronous data E1.

Next, the synchronous data generator 32 calculates the ordinal number n2(p) at the head of the p-th synchronous data E2(p) in the second measuring equipment Y2 by using the following equation (1).

$$nj+1(p)=Tj+1(k)\times(nj(k)-nj(p))-(1-Tj+1(k))\times L/2+nj+1(k) \quad \ldots (1)$$

nj(k) denotes the ordinal number of the k-th marker M(k) in the j-th measuring equipment Yj, and nj(p) denotes the ordinal number of the head of the p-th synchronous data Ej(p) in the j-th measuring equipment Yj. Tj+1(k) denotes the ratio of the number of works (measurement data) between the k-th and (k+1)-th markers M(k) and M(k+1) in the (j+1)-th measuring equipment Yj+1 to the number of works (measurement data) between the k-th and (k+1)-th markers M(k) and M(k+1) in the j-th measuring equipment Yj. Tj+1(k) is expressed by the following equation (2).

$$Tj+1(k)=(nj+1j(k+1)-nj+1(k))/(nj(k+1)-nj(k)) \quad \ldots (2)$$

The p-th synchronous data E2(p) made of L pieces of measurement data C2 from the head ordinal number n2(p) calculated by using the equation (1) is generated.

In the example of FIG. 5, the number of works between the k-th marker M(k) and the (k+1)-th marker M(k+1) increases by addition during conveyance from the first measuring equipment Y1 to the second measuring equipment Y2. Also in such a case, the interval between the ordinal numbers n2 at the heads in the neighboring synchronous data E2 in the second measuring equipment Y2 is widened by the equation (1).

On the other hand, the number of works between the (k+1)-th marker M(k+1) and the (k+2)-th marker M(k+2) decreases by removal during conveyance from the first measuring equipment Y1 to the second measuring equipment Y2. Also in such a case, the interval between the ordinal numbers n2 at the heads in the neighboring synchronous data E2 in the second measuring equipment Y2 is narrowed by the equation (1). Therefore, the synchronous data E among the different measuring equipments Yj can be associated with each other with high precision.

The method of generating the synchronous data Ej as shown in FIG. 5 is suitable for the manufacturing line ML in which the number of pieces of measurement data Cj included between the neighboring markers M is about 10 to 30 times as many as the number of pieces of measurement data Cj included in the synchronous data Ej and addition and removal during the interval is performed relatively uniformly. In this case, the section data Dj is associated with each other with high precision, so that the precision of association of the synchronous data Ej disposed in proportion to the number of pieces of measurement data Cj included in the section data Dj is also high.

Further, in the present embodiment, the synchronous data Ej associated with each other among the different measuring equipments Yj can be adjusted by using the minimum dead time and the dead works stored in the line information storage 13. Consequently, the head n2(p) of the synchronous data Ej calculated by using the equation (1) can be adjusted. Therefore, the synchronous data E can be associated with each other among the different measuring equipments Yj with high precision.

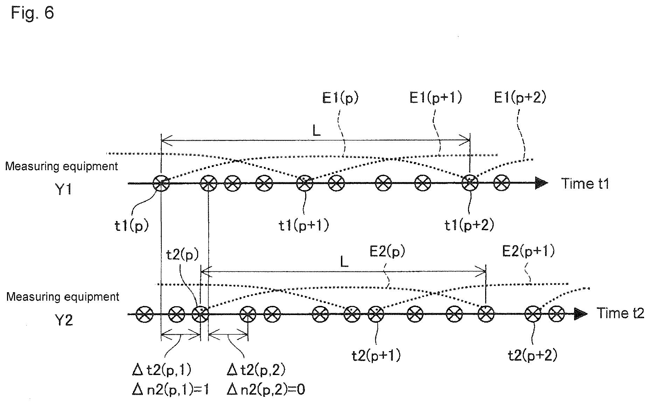

FIG. 6 shows a concrete example of adjusting the synchronous data Ej by using the dead time and the dead works. FIG. 6 shows an enlarged view of the p-th synchronous data Ej(p). The horizontal axis denotes time and X marks denote measurement time at which the measurement data Cj of the works is obtained.

As shown in FIG. 6, the difference Δt2(p,1) between the measurement time t1(p,1) at the head in the p-th synchronous data E1(p) with respect to the first measuring equipment Y1 and the measurement time t2(p,1) at the head in the p-th synchronous data E2(p) with respect to the second measuring equipment Y2 is the dead time at the head in the p-th synchronous data E2(p) with respect to the second measuring equipment Y2.

Therefore, the synchronous data generator 32 determines whether the difference Δt2(p,1) satisfies the following equation or not.

$$\Delta t(yj+1)-\Delta t(yj)\leq \Delta tj+1(p,q) \quad \ldots (3)$$

where Δt(yj) is the minimum dead time in the j-th measuring equipment Yj, and Δtj(p,q) denotes the dead time in the q-th measurement data Cj in the p-th synchronous data Ej(p) with respect to the j-th measuring equipment Yj.

If the equation (3) is not satisfied, the measurement data C1 obtained at the time t1(p,1) by the first measuring equipment Y1 does not correspond to the measurement data C2 obtained at the time t2(p,1) by the second measuring equipment Y2 but corresponds to the measurement data C2 obtained after the time t2(p,1). It can be therefore understood that the p-th synchronous data E2(p) with respect to the second measuring equipment Y2 be shifted to the right.

As shown in FIG. 6, the number Δn2(p,1) of pieces of measurement data C2 included in the difference (dead time) Δt2(p,1) is the number of unused data pieces. In the example of the diagram, one piece of the measurement data C2 is included in Δt2(p,1), so that Δn2(p,1)=1. Since the measurement data C2 is not included in Δt2(p,2), Δn2(p,2)=0.

Therefore, the synchronous data generator 32 determines whether the difference Δn2(p,1) satisfies the following equation or not.

$$0 \leq \Delta n_{j+1}(p,q) \leq \Delta n(y_{j}+1) - \Delta n(y_j) \quad \ldots (4)$$

where $\Delta n(y_j)$ denotes the maximum number of unused data pieces in the j-th measuring equipment Yj, and $\Delta n_j(p,q)$ denotes the number of unused measurement data pieces in the q-th measurement data Cj in the p-th synchronous data Ej(p) with respect to the j-th measuring equipment Yj.

If the equation (4) is not satisfied, the measurement data C1 obtained at the time t1(p, 1) by the first measuring equipment Y1 does not correspond to the measurement data C2 obtained at the time t2(p,1) by the second measuring equipment Y2 but corresponds to the measurement data C2 obtained before the time t2(p,1). It can be therefore understood that the p-th synchronous data E2(p) with respect to the second measuring equipment Y2 be shifted to the left.

The process may be similarly performed with respect to intermediate or last measurement data Cj in the synchronous data Ej. Further, the process may be similarly performed with respect to all of the measurement data Cj in the synchronous data Ej. In this case, the measurement data Cj in the synchronous data Ej can be associated with each other among the different measuring equipments Yj.

In place of the minimum dead time and the maximum number of unused data pieces, an average dead time and an average number of unused data pieces can be used. In this case, precision of association further improves.

The method using the dead time is suitable for the manufacturing line ML in which, although the number of buffers between the manufacturing equipments is larger than the number of pieces of the measurement data Cj included in the synchronous data Ej, a long-time stop hardly occurs because of high operating rate of the manufacturing equipments. In this case, the dead time between the manufacturing equipments can be specified as the minimum dead time, so that precision of association improves.

The method using the above-described number of unused data pieces is suitable for the manufacturing line ML in which the number of buffers between the manufacturing equipments is not so large as compared with the number of pieces of the measurement data Cj included in the synchronous data Ej, but long-time stops frequently occur. In this case, the number of unused data pieces for the manufacturing equipments which stopped for a long time is specified as the maximum number of unused data pieces, so that precision of association improves.

In some cases, the same measurement item exists in measurement items of different measuring equipments Yj or, for example, measurement items such as the operating current and operating resistance are correlated. The measurement data Cj of the measurement items having such relations often changes in a related manner.

In the present embodiment, the synchronous data generator 32 determines whether association of the synchronous data Ej is proper or not by using measurement items which are related in the different measuring equipments Yj. In the case where the association is improper, it is sufficient to shift the synchronous data Ej in the past direction or the present direction so that the association becomes proper. Thus, the precision of the association can improve.

The relationship among the measurement items will be concretely described with reference to FIGS. 7 and 8. FIG. 7 shows, in time sequence, measurement data C1 and synchronous data E1 with respect to the first measuring equipment Y1 and measurement data C2 and synchronous data E2 with respect to the second measuring equipment Y2.

In FIG. 7, as the measurement data C1 obtained by the first measuring equipment Y1, measurement data C1(1) and C1(2) of spring constant and operating current, respectively, are shown. As the measurement data C2 obtained by the second measuring equipment Y2, measurement data C2(1) and C2(2) of operating resistance and external sizes, respectively, are shown. Provided that electronic components of constant voltage are manufactured in the case of the diagram, it is expected that the operating current of the first measuring equipment Y1 and the operating resistance of the second measuring equipment Y2 have negative correlation in accordance with Ohm's law.

FIG. 8 is a graph showing the correlation between the operating current of the first measuring equipment Y1 and the operating resistance of the second measuring equipment Y2. In the graph of the diagram, an average measurement value of the synchronous data E1(2) of the operating current and an average measurement value of the synchronous data E2(1) corresponding to the operating resistance are plotted set by set. It is understood from FIG. 8 that the operating current and the operating resistance have the negative correlation.

As long as works having similar quality are measured by the same measuring equipment Yj, usually, the operating current and the operating resistance do not change so much. Therefore, the graph in the diagram is of an enlarged view of a specific region, and the inverse-proportional relation between the operating current and the operating resistance can approximate linear function.

Referring to FIG. 8, in the case where the average measurement value of the synchronous data E1(2) of the operating current and that of the corresponding synchronous data E2(1) of the operating resistance are out of the range surrounded by the broken line, it can be determined that the association between the synchronous data E1 and E2 is improper. Whether the measurement items have any correlation or not can be determined by obtaining a correlation coefficient. Since the equation for obtaining the correlation coefficient is well known, it will not be described.

Concretely, the synchronous data generator 32 pre-stores the measurement items having correlation in different measuring equipments Yj and the range of the coefficient of correlation between the measurement items, calculates the correlation coefficient with respect to the average measurement value of the synchronous data Ej between the measurement items included between the markers M and, when the calculated correlation coefficient lies out of the range, determines that the association between the synchronous data Ej is improper. In this case, properness of the association is determined by using the average measurement value of the synchronous data Ej. Even if a work is added or taken during the operation, the influence on the average measurement value is low. Therefore, the influence on determination of the properness can be suppressed.

As described above, the synchronous data generator 32 determines properness of association of the synchronous data Ej by using the correlation between measurement items. In other words, when the association of the synchronous data Ej is proper, the correlation between other measurement items can be obtained. In the example of FIG. 7, the correlation between the operating current and the operating resistance as electric characteristics is used. Alternately, by using the synchronous data Ej properly associated with each other, the correlation between spring constant and the external sizes as mechanism characteristics can be obtained. It newly suggests that a negative correlation exists between the spring constant and the external sizes.

Adjustment using the correlation coefficient is suitable for the case where a measurement value of measurement data included between the neighboring markers M changes. Therefore, the adjustment is suitable for the case where the number of pieces of measurement data included between the markers M is larger than the number of pieces of measurement data Cj in the synchronous data Ej (by approximately 30 to 100 times).

Next, the parameter input device 15 will be described. To change manufacturing parameters of a manufacturing equipment, the site worker W selects a manufacturing equipment and enters new manufacturing parameters to the parameter input device 15. The parameter input device 15 transmits manufacturing parameter data indicative of the inputted manufacturing parameters to the selected manufacturing equipment. Consequently, the manufacturing parameters of the manufacturing equipment which has received the manufacturing parameter data are changed. In the following, the manufacturing equipment whose manufacturing parameters are changed will be called a "changed equipment".

The parameter input device 15 has an input device for receiving an input from the site worker W. Examples of the input device are a keyboard, a numeric keypad, a pointing device such as a mouse, and a touch panel. In the case of entering the manufacturing parameters by using a bar code, a bar code reader may be used as the parameter input device 15.

In the present embodiment, the parameter input device 15 obtains time when the site worker W enters the manufacturing parameters as manufacturing parameter change time and transmits the obtained change time and changed-equipment information indicative of the changed equipment selected by the site worker W to the data comparator 16. The changed equipment may transmit change time indicative of time when the manufacturing parameters are changed, and changed-equipment information indicative of the changed equipment to the data comparator 16.

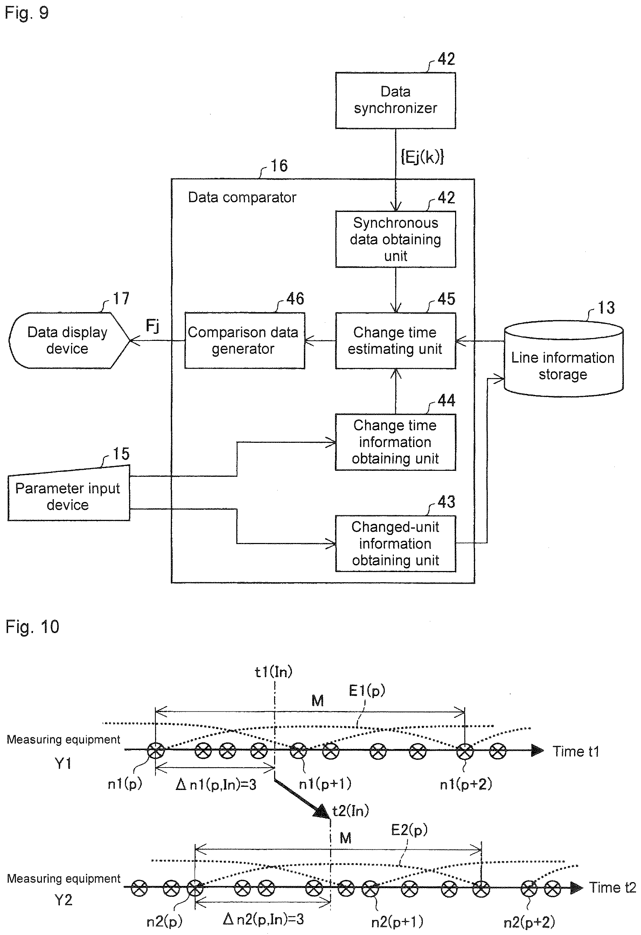

The data comparator 16 will now be described with reference to FIGS. 9 and 10. FIG. 9 shows a schematic configuration of the data comparator 16. As shown in the diagram, the data comparator 16 has a synchronous data obtaining unit 42, a changed-equipment information obtaining unit 43, a change time information obtaining unit 44, a change time estimating unit (change determining unit) 45, and a comparison data generator (display controller) 46.

The synchronous data obtaining unit 42 obtains the synchronous data Ej from the data synchronizer 14. The synchronous data obtaining unit 42 transmits the obtained synchronous data Ej to the change time estimating unit 45.

The changed-equipment information obtaining unit 43 obtains changed-equipment information from the parameter input device 15. The changed-equipment information obtaining unit 43 transmits the obtained changed-equipment information to the line information storage 13. The line information storage 13 reads the average dead time and the average number of unused data pieces of the changed equipment and the average dead time and the average number of unused data pieces of the measuring equipment Yj positioned immediately next to the changed equipment on the downstream side, and transmits the read data to the change time estimating unit 45.

The change time information obtaining unit 44 obtains change time information from the parameter input device 15. The change time information obtaining unit 44 transmits the obtained change time information to the change time estimating unit 45.

The change time estimating unit 45 estimates change time as time when the measurement data Cj in each of the measuring equipments Yj changes in accordance with a change in the manufacturing parameters of the changed equipment. The change time estimating unit 45 transmits synchronous data before the estimated change time as synchronous data before a change, and synchronous data after the estimated change time as synchronous data after the change, to the comparison data generator 46. The process of estimating the change time will be described with reference to FIG. 10.

FIG. 10 shows a concrete example of estimating change time by using the dead time and the number of unused data pieces. FIG. 10 is similar to FIG. 6 except for estimation of change time. In the case of FIG. 10, the first processing unit X1 is a changed equipment. Therefore, the measuring equipment immediately next to the changed equipment on the downstream side is the first measuring equipment Y1 (see FIG. 1).

First, the change time estimating unit 45 obtains the average dead time and the average number of unused data pieces of the first processing unit X1 and those of the first measuring equipment Y1 from the line information storage 13, and calculates the difference of the average dead time and the average number of unused data pieces. The difference corresponds to the average dead time and the average number of unused data pieces between the first processing equipment X1 and the first measuring equipment Y1.

Next, the change time estimating unit 45 adds the calculated difference of the average dead time to the change time received from the change time information obtaining unit 44, thereby estimating change time $t1(ln)$ in the first measuring equipment Y1. Then, synchronous data (the p-th synchronous data $E1(p)$ in the example of FIG. 10) in which the estimated change time $t1(ln)$ is included in the measurement period of the measurement data C1 is specified. After that, with respect to the specified synchronous data $E1(p)$, the number $\Delta n1(p,ln)$ of pieces of the measurement data C1 included between the measurement time of the head measurement data C1 and the change time is calculated. In the example shown in the diagram, the number $\Delta n1(p,ln)$ is 3.

With respect to the synchronous data $Ej(p)$ of the another measuring equipment Yj associated with the synchronous data $E1(p)$ of the first measuring equipment Y1, the change time estimating unit 45 estimates that the change time $tj(ln)$ exists between the measurement time of the $\Delta nj(p,ln)$-th measurement data Cj from the head, which corresponds to above-mentioned number the $\Delta n1(p,ln)$, and the measurement time of the next measurement data Cj. Consequently, it can be estimated that the data from the head to the $\Delta nj(p,ln)$-th data is the measurement data Cj before the change and the subsequent measurement data Cj is the measurement data Cj after the change.

The comparison data generator 46 obtains the synchronous data before the change and the synchronous data after the change from the change time estimating unit 45 and generates comparison data Fj indicative of the states before and after the change of the measurement data Cj. The comparison data may be time-series data of the measurement data Cj or statistical data of the measurement data Cj such as histogram. The comparison data generator 46 transmits the generated comparison data to the data display device 17.

Since the influence of the change in the manufacturing parameters does not usually reach measuring equipments upstream of the changed equipment, so that comparison data does not have to be generated. The statistical amount of the synchronous data may be used as comparison data. In this case, however, the details of data fluctuations before and after the change may not be easily referred to.

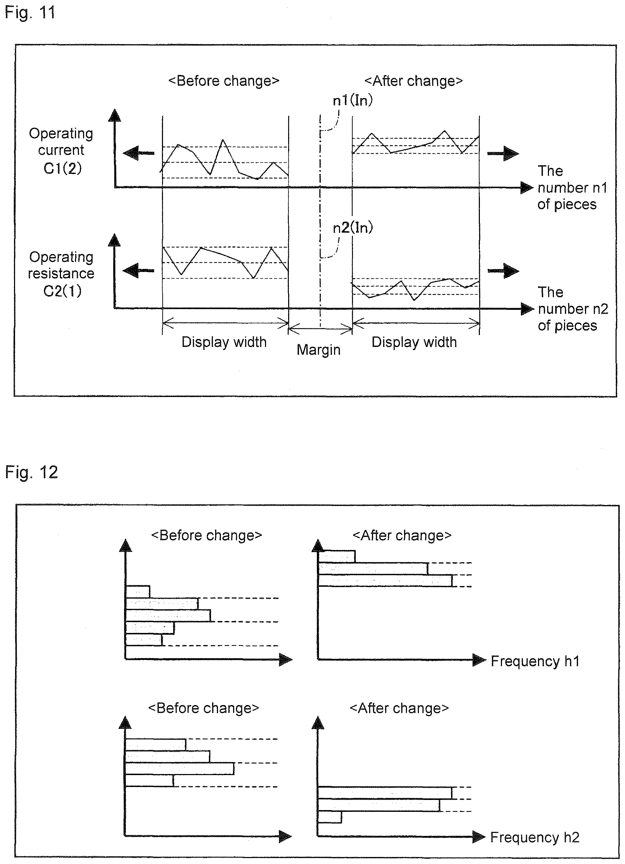

The data display device 17 will now be described with reference to FIGS. 11 and 12. The data display device 17 receives section data Dj from the data collector 12, synchronous data Ej from the data synchronizer 14, and comparison data Fj from the data comparator 16 and displays the received various data in graphs. The site worker W can refer to the various data displayed on the data display device 17.

The data display device 17 has, although not shown, a display device such as a flat panel display such as a liquid crystal display or plasma display or a CRT, and a display controller for controlling the display device. Desirably, the data display device 17 has a switching unit for switching the graphs of the section data Dj, the synchronous data Ej, and the comparison data Fj in accordance with an instruction of the site worker W.

A concrete example in which the data display device 17 displays the comparison data Fj will be described with reference to FIGS. 11 and 12.

FIG. 11 shows an example of the display screen in the case of displaying time-series data of the measurement data Cj as the comparison data Fj. In this case, as shown in the diagram, the measurement data Cj of the measuring equipments Yj is disposed so as to be aligned in vertical direction with the change time of the measuring equipments Yj at the center. By the display, the site worker W can easily grasp the correspondence of the measurement data Cj in the measuring equipments Yj. Since the change time of the measuring equipments Yj is placed at the center, even after a long time elapses after the change, the site worker W can compare the measurement data Cj before and after the change.

As time elapses from the change time, the influence on the measurement data Cj by factors other than the change in the manufacturing parameters increases. Therefore, by comparing measurement data Cj which is before and after the change and close to the center with each other, the measurement data Cj on which the influence of the factors other than the change in the manufacturing parameters is not exerted so much can be compared with each other.

When comparing the time-series data in a real time manner, it is usually the case that, while many pieces of data before the change as past information exist, only a small amount of data exists immediately after the change as future information.

On the other hand, the site worker W desires to know the result of the change in the manufacturing parameters as soon as possible. Consequently, a conventional data display device displays a sufficient amount of the measurement data Cj before the change and an insufficient amount of the measurement data Cj after the change. However, in a such display, the site worker W is sometimes influenced by the large amount of the measurement data Cj before the change, and erroneously grasps the state after the change.

In contrast, the data display device 17 of the present embodiment displays, as shown in FIG. 11, the time-series data of the measurement data Cj in which the amount of the measurement data Cj before the change and that after the change are almost the same. Consequently, the site worker W can properly compare the measurement data Cj before and after the change.

In the case of FIG. 11, as the amount of the measurement data Cj after the change increases, the display width extends from the center. Consequently, the site worker W can immediately determine whether the amount of the measurement data Cj after the change is large or not and intuitively determine the reliability of the measurement data Cj after the change. Therefore, the site worker W can make proper decision on the change in the manufacturing parameters.

As described above, the data comparator 16 estimates change time of another measuring equipment Yj on the basis of the change time in the measuring equipment Yj as a reference (the first measuring equipment Y1 in FIG. 10) and association of the synchronous data Ej of the measuring equipments Yj. When the precision of the association is not so high, the possibility that the change time of the another measuring equipment Yj is deviated from the actual change time is high. In this case, erroneous information may be provided for the site worker W in such a manner that the measurement data Cj which is actually before the change is displayed as the measurement data Cj after the change, and vice versa.

In the data display device 17 of the present embodiment, as shown in FIG. 11, a predetermined margin area is provided around the change time nj(ln), and the measurement data Cj is not displayed in the margin area. It can prevent erroneous information from being provided for the site worker W.

FIG. 12 shows an example of the display screen in the case of displaying histograms of the measurement data Cj as the comparison data Fj. In this case, since histograms before and after the change have to be compared with histograms of another measuring equipment Yj simultaneously, the histograms are disposed two-dimensionally as shown in the diagram.

Also in the case of displaying histograms, it is desired that, in a manner similar to the case of displaying time-series data, frequencies of the histogram before the change and those after the change are set almost equal to each other, and that the measurement data Cj around the change time nj(ln) is not displayed in the histograms.

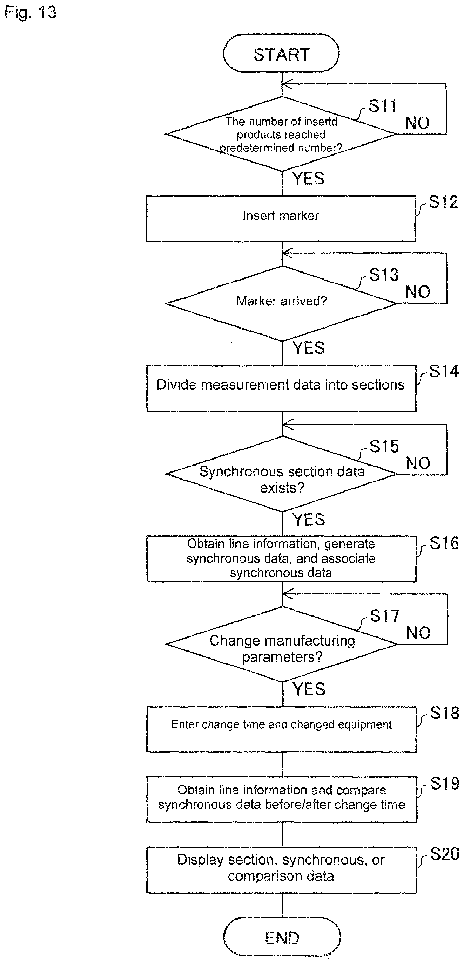

Next, the operations in the data display system 10 having the above-described configuration will be described with reference to FIG. 13. FIG. 13 shows an outline of the operations in the data display system 10. As shown in the diagram, first, when the number of products (works) inserted by the inserting equipment S reaches a predetermined number (step S11 which may be simply described as "S11" and the other steps will be similarly described), the marker controller 11 makes the inserting equipment S insert a marker (S12).

When the marker reaches a measuring equipment Yj (S13), the data collector 12 divides a time series of the measurement data Cj obtained by the measuring equipments Yj every marker, thereby generating the section data Dj (S14). When the data collector 12 determines that the section data Dj to be synchronized (associated) with each other among different measuring equipments Yj exists (S15), the data synchronizer 14 obtains line information (the minimum dead time and the maximum number of unused data pieces) from the line information storage 13 and, by using the obtained line information, generates the synchronous data Ej from the section data Dj (S16).

When the site worker W tries to change the manufacturing parameters (S17) and change time and a equipment to be changed are entered in the parameter input device 15 (S18), the data comparator 16 obtains the line information from the line information storage 13, by using the obtained line information and the synchronous data Ej, estimates the change time in each of the measuring equipments Yj, and generates comparison data with which the synchronous data Ej before and after the estimated change time is compared (S19).

The data display device 17 selects and displays at least one of the section data Dj from the data collector 12, the synchronous data Ej from the data synchronizer 14, and the comparison data Fj from the data comparator 16 (S20). After that, the operations in the data display system 10 are finished.

The present invention is not limited to the foregoing embodiments but can be variously modified in the scope of claims. Embodiments obtained by combining technical means properly modified within the scope of claims are also included in the technical scope of the present invention.

For example, although the marker M is inserted from the upstream end of the manufacturing line ML in the above embodiment, the marker M may be inserted from some midpoint of the manufacturing line ML. A marker can be inserted from any place as long as the place is upstream of, for example, a measuring equipment Yj to be associated.

In the foregoing embodiment, the synchronous data Ej disposed evenly with respect to the section data Dj is generated, the synchronous data Ej is associated with each other among the measuring equipments, and the association is adjusted by using the dead time, the number of unused data pieces, and the correlation coefficient.

Alternatively, the adjustment of the association can be also performed by using at least one of the dead time, the number of unused data pieces, and the correlation coefficient.

It is also possible to generate the synchronous data Ej by using at least one of the dead time, the number of unused data pieces, and the correlation coefficient without using the marker M, and associate the synchronous data Ej with each other among different measuring equipments Yj.

For example, by using the average dead time and the average number of unused data pieces, the synchronous data Ej associated with each other among the measuring equipments Yj can be generated. The generated synchronous data Ej can be adjusted by using the correlation coefficient. It is also possible to determine the range of the synchronous data Ej associated with each other among the measuring equipments Yj by using the minimum dead time and the maximum number of unused data pieces and adjust the synchronous data Ej by using the correlation coefficient while shifting the head of the synchronous data Ej in the determined range.

Further, the measurement data Cj in different measuring equipments Yj can be associated with each other by using at least one of the average dead time, the average number of unused data pieces, and the correlation coefficient without using the marker M.

Finally, each of the devices in the data display system 10, particularly, the data collector 12, the data synchronizer 14, the data comparator 16, and the data display device 17 may be constructed by a hardware logic or by software by using a CPU as follows.

The data display system 10 includes a CPU (Central Processing Unit) for executing an instruction of a control program realizing the functions, a ROM 52 (Read Only Memory) storing the program, a RAM (Random Access Memory) on which the program is expanded, and a storage (recording medium) such as a memory storing the program and various data. The object of the present invention can be also realized in a manner such that a recording medium is supplied to the data display system 10, the recording medium computer-readably recording a program code of the control program (executable program, intermediate code program, or source program) of the data display system 10 as software realizing the above-described functions, and the computer (or CPU or MPU) reads and executes the program code recorded on the recording medium.

Examples of the recording medium are tapes such as a magnetic tape and a cassette tape, disks including magnetic disks such as a floppy (registered trademark) disk and a hard disk and optical discs such as CR-ROM, MO, MD, DVD, and CD-R, cards such as an IC card (including a memory card), and optical cards, and semiconductor memories such as mask ROM, EPROM, EEPROM, and flash ROM.

The data display system 10 may be constructed such that it can be connected to a communication network, and the program code may be supplied via the communication network. The communication network is not limited and, for example, the Internet, intranet. extranet, LAN, ISDN, VAN, CATV communication network, virtual private network, telephone network, mobile communication network, satellite communication network, and the like can be used. A transmission medium as a component of the communication network is not limited. For example, wired transmission such as IEEE1394, USB, power-line carrier, cable TV line, telephone line, and ADSL line or wireless 53 transmission such as infrared rays of IrDA or remote controller, Bluetooth (registered trademark), 802.11 wireless network, HDR, cellular phone network, satellite line, terrestrial digital network, and the like can be also used. The present invention can be also realized in a mode of a computer data signal buried in a carrier wave, as an embodiment of the program code in electronic transmission.

The data associating apparatus and the data display apparatus according to the present invention can be applied not only to a manufacturing line but also to an apparatus for monitoring and controlling various processes of, for example, a home electric appliance.

**Claims**

1. A data display apparatus in a manufacturing process of works being conveyed on a manufacturing line (ML) for displaying data based on measurement data obtained by a plurality of measuring equipments (Y1,...,Yj) for obtaining measurement data including operating characteristics of the work being conveyed, the measuring equipments including a first measuring equipment (Y1) and a second measuring equipment (Y2), the second measuring equipment (Y2) being arranged downstream of the first measuring equipment (Y1),
the data display apparatus comprising:

   (a) a display (17) for displaying information;
   (b) a display controller (46) for controlling the display such as to display a series of preceding data pieces before certain time and a series of subsequent data pieces after the time in such a manner that the number of pieces of preceding data to be displayed becomes almost equal to the number of pieces of the subsequent data to be displayed;
   (c) a change time information obtaining unit (44), when manufacturing parameters of a manufacturing equipment (X1) provided for the manufacturing line (ML) are changed, for obtaining change time on which the change is made, the first measuring equipment (Y1) being a measuring equipment which is immediately next to the manufacturing equipment (X1) on the downstream side;
   (d) a change time estimating unit (45) for estimating change time on which measurement data of the first measuring equipment (Y1) changes due to a change in the manufacturing parameters by using at least one of a dead time and a number of unused data pieces between the manufacturing equipment (X1) and the first measuring equipment (Y1), and the change time obtained by the change time information obtaining unit (44);

(e) a data associating unit (14) for associating first and second synchronous data with each other among the first and second measuring equipments (Y1, Y2), each of the first and second synchronous data being a set of measurement data obtained by its respective measuring equipment from a plurality of objects to be manufactured; and

(f) a change determining unit (45) for determining, as before-the-change measurement data with respect to the first measurement equipment (Y1), measurement data before the estimated change time and determining, as after-the-change measurement data with respect to the first measurement equipment (Y1), measurement data after the estimated change time,

wherein the change determining unit (45) is further adapted to determine, as before-the-change measurement data with respect to the second measuring equipment (Y2), measurement data included in second synchronous data associated with first synchronous data including the before-the-change measurement data with respect to the first measuring equipment (Y1) and determine, as after-the-change measurement data with respect to the second measuring equipment (Y2), measurement data included in second synchronous data associated with first synchronous data including the after-the-change measurement data with respect to the first measuring equipment (Y1), wherein the data associating unit (14) comprises:

a data generator (32) for generating first synchronous data with respect to the first measuring equipment (Y1), and generating second synchronous data, corresponding to the generated first synchronous data, with respect to the second measuring equipment (Y2), and

wherein the data generator (32) is adapted

to generate a plurality of candidates for the second synchronous data for the second measuring equipment (Y2), each candidate having the same number of pieces of measurement data, measured by the second measuring equipment (Y2), in time sequence, as that of the first synchronous data with respect to the first measuring equipment (Y1), the candidates being shifted in a time axis relative to each other by a predetermined number of pieces of measurement data,

to calculate a coefficient of correlation between the first synchronous data for the first measuring equipment (Y1) with respect to a first operating characteristic of the work being conveyed and each of the candidates for the second measuring equipment (Y2) with respect to a second operating characteristic of the work being conveyed,

to repeat the operation for each of the candidates to specify a candidate having a maximum absolute value of the correlation coefficient, and

to use the specified candidate as the second synchronous data for the second measuring equipment (Y2), the display controller (46) being adapted to control the display (17) so as to display, with respect to each of the first and second measuring equipments (Y1, Y2), said before-the-change measurement data as the series of preceding data pieces and said after-the-change measurement data as the series of subsequent data pieces.

2. A data display apparatus control program for operating the data display apparatus according to claim 1, and for making a computer function as the components of the apparatus.

3. A computer-readable recording medium on which the data display apparatus control program according to claim 2 is recorded.

**Patentansprüche**

1. Datenanzeigevorrichtung in einem Fertigungsprozess von Erzeugnissen, die auf einer Fertigungslinie (ML) befördert werden, zum Anzeigen von Daten beruhend auf Messdaten, die durch eine Vielzahl von Messeinrichtungen (Y1,...,Yj) zum Beschaffen von Messdaten beschafft werden, die Betriebseigenschaften des Erzeugnisses umfassen, das befördert wird, wobei die Messeinrichtungen eine erste Messeinrichtung (Y1) und eine zweite Messeinrichtung (Y2) umfassen, wobei die zweite Messeinrichtung (Y2) nachgelagert von der ersten Messeinrichtung (Y1) angeordnet ist, wobei die Datenanzeigevorrichtung aufweist:

(a) eine Anzeige (17) zum Anzeigen von Informationen;
(b) eine Anzeigesteuereinrichtung (46) zum Steuern der Anzeige, um eine Reihe von vorausgehenden Datenteilen vor einer bestimmten Zeit und eine Reihe von nachfolgenden Datenteilen nach der Zeit in einer solchen Weise anzuzeigen, dass die Anzahl der Teile der vorausgehenden Daten, die angezeigt werden sollen, ungefähr gleich der Anzahl der Teile der nachfolgenden Daten, die angezeigt werden sollen, wird;

(c) eine Änderungszeitinformationsbeschaffungseinheit (44), wenn Fertigungsparameter einer für die Fertigungslinie (ML) bereitgestellten Fertigungseinrichtung (X1) geändert werden, zum Beschaffen der Änderungszeit, zu der die Änderung vorgenommen wird, wobei die erste Messeinrichtung (Y1) eine Messeinrichtung ist, die sich unmittelbar benachbart zur Fertigungseinrichtung (X1) auf der nachgelagerten Seite befindet;

(d) eine Änderungszeitschätzeinheit (45) zum Schätzen der Änderungszeit, zu der sich Messdaten der ersten Messeinrichtung (Y1) infolge einer Änderung der Fertigungsparameter ändern, durch Verwenden einer Totzeit und/oder einer Anzahl nicht genutzter Datenteile zwischen der Fertigungseinrichtung (X1) und der ersten Messeinrichtung (Y1), und der durch die Änderungszeitinformationsbeschaffungseinheit (44) beschafften Änderungszeit;

(e) eine Datenverknüpfungseinheit (14) zum Verknüpfen von ersten und zweiten synchronen Daten miteinander zwischen der ersten und zweiten Messeinrichtung (Y1, Y2), wobei die ersten und zweiten synchronen Daten jeweils aus einem Satz von Messdaten bestehen, die durch ihre jeweilige Messeinrichtung von einer Vielzahl von herzustellenden Objekten beschafft werden; und

(f) eine Änderungsfeststellungseinheit (45) zum Feststellen von Messdaten vor der geschätzten Änderungszeit als Vor-der-Änderung-Messdaten bezüglich der ersten Messeinrichtung (Y1) und zum Feststellen von Messdaten nach der geschätzten Änderungszeit als Nach-der-Änderung-Messdaten bezüglich der ersten Messeinrichtung (Y1), wobei die Änderungsfeststellungseinheit (45) ferner eingerichtet ist, Messdaten, die in den zweiten synchronen Daten enthalten sind, die mit den ersten synchronen Daten verknüpft sind, die die Vor-der-Änderung-Messdaten bezüglich der ersten Messeinrichtung (Y1) enthalten, als Vor-der-Änderung-Messdaten bezüglich der zweiten Messeinrichtung (Y2) festzustellen, und Messdaten, die in den zweiten synchronen Daten enthalten sind, die mit den ersten synchronen Daten verknüpft sind, die die Nach-der-Änderung-Messdaten bezüglich der ersten Messeinrichtung (Y1) enthalten, als Nach-der-Änderung-Messdaten bezüglich der zweiten Messeinrichtung (Y2) festzustellen,

wobei die Datenverknüpfungseinheit (14) aufweist:

einen Datengenerator (32) zum Erzeugen der ersten synchronen Daten bezüglich der ersten Messeinrichtung (Y1) und Erzeugen der zweiten synchronen Daten, die den erzeugten ersten synchronen Daten entsprechen, bezüglich der zweiten Messeinrichtung (Y2), und

wobei der Datengenerator (32) eingerichtet ist:

eine Vielzahl von Kandidaten für die zweiten synchronen Daten für die zweite Messeinrichtung (Y2) zu erzeugen, wobei jeder Kandidat dieselbe Anzahl der Teile der Messdaten, die durch die zweite Messeinrichtung (Y2) in Zeitabfolge gemessen werden, wie die der ersten synchronen Daten bezüglich der ersten Messeinrichtung (Y1) aufweist, wobei die Kandidaten auf einer Zeitachse relativ zueinander um eine vorgegebene Anzahl der Teile der Messdaten verschoben werden,

einen Koeffizienten einer Korrelation zwischen den ersten synchronen Daten für die erste Messeinrichtung (Y1) bezüglich einer ersten Betriebseigenschaft des Erzeugnisses, das befördert wird, und jedem der Kandidaten für die zweite Messeinrichtung (Y2) bezüglich einer zweiten Betriebseigenschaft des Erzeugnisses zu berechnen, das befördert wird,

die Operation für jeden der Kandidaten zu wiederholen, um einen Kandidaten zu spezifizieren, der einen maximalen Absolutwert des Korrelationskoeffizienten aufweist, und den spezifizierten Kandidaten als die zweiten synchronen Daten für die zweite Messeinrichtung (Y2) zu verwenden,

wobei die Anzeigesteuereinrichtung (46) eingerichtet ist, die Anzeige (17) zu steuern, bezüglich jeder der ersten und zweiten Messeinrichtung (Y1, Y2) die Vor-der-Änderung-Messdaten als die Reihe von vorausgehenden Datenteilen und die Nach-der-Änderung-Messdaten als die Reihe von nachfolgenden Datenteilen anzuzeigen.

2. Datenanzeigevorrichtungssteuerprogramm zum Betreiben der Datenanzeigevorrichtung nach Anspruch 1, und um einen Computer zu veranlassen, als die Komponenten der Vorrichtung zu funktionieren.

3. Computerlesbares Aufzeichnungsmedium, auf dem das Datenanzeigevorrichtungssteuerprogramm nach Anspruch 2 aufgezeichnet ist.

**Revendications**

1. Appareil d'affichage de données dans le cadre d'un processus de fabrication de pièces transportées sur une chaîne de fabrication (ML), pour l'affichage de données sur la base de données de mesure obtenues par une pluralité d'équipements de mesure (Y1,...,Yj) permettant l'obtention de données de mesure comprenant des caractéristiques fonctionnelles de la pièce transportée, les équipements de mesure comportant un premier équipement de mesure (Y1) et un deuxième équipement de mesure (Y2), le deuxième équipement de mesure (Y2) étant situé en aval du premier équipement de mesure (Y1),
ledit appareil d'affichage de données comprenant :

(a) un écran (17) pour l'affichage d'informations ;
(b) un dispositif de commande d'écran (46) pour la commande d'écran de manière à afficher une série d'éléments de données antérieurs à un temps défini et une série d'éléments de données postérieurs au temps défini, de sorte que le nombre d'éléments de données antérieurs à afficher devienne sensiblement égal au nombre d'éléments de données postérieurs à afficher ;
(c) une unité d'acquisition de temps de changement (44), en cas de changement des paramètres de fabrication d'un équipement de fabrication (X1) prévu pour la chaîne de fabrication (ML), pour l'acquisition du temps où le changement a été effectué, le premier équipement de mesure (Y1) étant un équipement de mesure immédiatement en aval de l'équipement de fabrication (X1) ;
(d) une unité d'estimation de temps de changement (45) pour l'estimation du temps de changement des données de mesure du premier équipement de mesure (Y1) suite à un changement des paramètres de fabrication, en recourant à un temps mort et/ou à un nombre d'éléments de données inutilisés entre l'équipement de fabrication (X1) et le premier équipement de mesure (Y1), et au temps de changement acquis par l'unité d'acquisition de temps de changement (44) ;
(e) une unité d'association de données (14) pour l'association entre elles de premières et de deuxièmes données synchrones provenant du premier et du deuxième équipements de mesure (Y1, Y2), les premières ainsi que les deuxièmes données synchrones étant des ensembles de données de mesure respectifs obtenu par l'équipement de mesure correspondant à partir d'une pluralité d'objets à fabriquer ; et
(f) une unité de détermination de changement (45) pour la détermination, en tant que données de mesure antérieures au changement relativement au premier équipement de mesure (Y1), de données de mesure antérieures au temps de changement estimé et la détermination, en tant que données de mesure postérieures au changement relativement au premier équipement de mesure (Y1), de données de mesure postérieures au temps de changement estimé,

où l'unité de détermination de changement (45) est en outre prévue pour déterminer, en tant que données de mesure antérieures au changement relativement au deuxième équipement de mesure (Y2), des données de mesure comprises dans des deuxièmes données synchrones associées à des premières données synchrones comprenant les données de mesure antérieures au changement relativement au premier équipement de mesure (Y1), et pour déterminer, en tant que données de mesure postérieures au changement relativement au deuxième équipement de mesure (Y2), des données de mesure comprises dans des deuxièmes données synchrones associées aux premières données synchrones comprenant les données de mesure postérieures au changement relativement au premier équipement de mesure (Y1),
où l'unité d'association de données (14) comprend :

un générateur de données (32) pour la génération de premières données synchrones relativement au premier équipement de mesure (Y1), et la génération de deuxièmes données synchrones correspondant aux premières données synchrones générées, relativement au deuxième équipement de mesure (Y2), et
où le générateur de données (32) est prévu
pour générer une pluralité de candidats pour les deuxièmes données synchrones pour le deuxième équipement de mesure (Y2), chaque candidat présentant le même nombre d'éléments de données de mesure, mesurés par le deuxième équipement de mesure (Y2), en séquence temporelle, que celui des premières données synchrones relativement au premier équipement de mesure (Y1), les candidats étant décalés sur un axe temporel l'un par rapport à l'autre d'un nombre d'éléments de données de mesure prédéfini,
pour calculer un coefficient de corrélation entre les premières données synchrones pour le premier équipement de mesure (Y1) par rapport à une première caractéristique de fonctionnement de la pièce transportée et chacun des candidats pour le deuxième équipement de mesure (Y2) relativement à une deuxième caractéristique de fonctionnement relativement à la pièce transportée,
pour répéter l'opération pour chacun des candidats afin de spécifier un candidat présentant une valeur absolue maximale du coefficient de corrélation, et

pour utiliser le candidat spécifié en tant que deuxièmes données synchrones pour le deuxième équipement de mesure (Y2),

le dispositif de commande d'écran (46) étant prévu pour commander l'écran (17) de manière à afficher, relativement au premier et au deuxième équipements de mesure (Y1, Y2), les données de mesure antérieures au changement en tant que série d'éléments de données antérieurs et les données de mesure postérieures au changement en tant que série d'éléments de données postérieurs.

2. Programme de commande d'appareil d'affichage de données pour le fonctionnement de l'appareil d'affichage de données selon la revendication 1, et pour réaliser une fonction informatique en tant que composants de l'appareil.

3. Support d'enregistrement lisible par ordinateur sur lequel est enregistré le programme de commande d'appareil d'affichage de données selon la revendication 2.

Fig. 1

EP 1 865 451 B1

Fig. 2

Fig. 3

Measuring equipment Y1

Measuring equipment Y2

Fig. 4

Fig. 5

Fig. 6

Fig. 7

Fig. 8

Fig. 9

Fig. 10

Fig. 11

Fig. 12

Fig. 13

```
                    ┌─────────────┐
                    │    START    │
                    └──────┬──────┘
                           │
              ┌────────────▼────────────┐
              │   The number of insertd  │  ┌─S11
           ◄──┤   products reached       │     NO
              │  predetermined number?   │
              └────────────┬────────────┘
                          YES
              ┌────────────▼────────────┐  ┌─S12
              │       Insert marker      │
              └────────────┬────────────┘
                           │
              ┌────────────▼────────────┐  ┌─S13
           ◄──┤      Marker arrived?     │     NO
              └────────────┬────────────┘
                          YES
              ┌────────────▼────────────┐  ┌─S14
              │ Divide measurement data  │
              │      into sections       │
              └────────────┬────────────┘
                           │
              ┌────────────▼────────────┐  ┌─S15
           ◄──┤  Synchronous section data│     NO
              │         exists?          │
              └────────────┬────────────┘
                          YES
              ┌────────────▼────────────┐  ┌─S16
              │ Obtain line information,  │
              │ generate synchronous data,│
              │ and associate             │
              │ synchronous data          │
              └────────────┬────────────┘
                           │
              ┌────────────▼────────────┐  ┌─S17
           ◄──┤  Change manufacturing    │     NO
              │      parameters?         │
              └────────────┬────────────┘
                          YES
              ┌────────────▼────────────┐  ┌─S18
              │ Enter change time and     │
              │    changed equipment      │
              └────────────┬────────────┘
                           │
              ┌────────────▼────────────┐  ┌─S19
              │ Obtain line information    │
              │ and compare synchronous   │
              │ data before/after change  │
              │          time             │
              └────────────┬────────────┘
                           │
              ┌────────────▼────────────┐  ┌─S20
              │ Display section,          │
              │ synchronous, or           │
              │   comparison data         │
              └────────────┬────────────┘
                           │
                    ┌──────▼──────┐
                    │     END     │
                    └─────────────┘
```

**EP 1 865 451 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002138384 A
- JP 2003109885 A
- JP 2004347558 A
- JP 2005339498 A